# EUROPEAN PATENT SPECIFICATION

(11) **EP 0 123 488 B1**
(45) Date of publication and mention of the grant of the patent: **23.08.1995**
(21) Application number: 84302568.5
(22) Date of filing: 16.04.1984
(51) Int. Cl.: G02F 1/01

(54) **Optical switch**
Optischer Schalter
Commutateur optique

(30) Priority: 18.04.1983 JP 66906/83
(43) Date of publication of application: 31.10.1984
(60) Divisional application: 94120081.8
(73) Proprietor: FUJITSU LIMITED, Kawasaki-shi, Kanagawa 211 (JP)
(72) Inventor: Shirasaki, Masataka, Kawasaki-shi Kanagawa 215 (JP)
(74) Representative: Sunderland, James Harry

(56) References cited:
- US-A- 3 574 441
- APPLIED OPTICS, vol. 21, no. 11, 1st June 1982, pages 1943-1949, Optical Society of America, New York, US; M. SHIRASAKI et al.: "Bistable magnetooptic switch for multimode optical fiber"
- APPLIED OPTICS, vol. 21, no. 23, 1st December 1982, pages 4229-4234, Optical Society of America, New York, US; M. SHIRASAKI et al.: "Nonmechanical optical switch for single-mode fibers"
- PATENT ABSTRACTS OF JAPAN, vol. 4, no. 168, 20th November 1980, page 10 P 37; & JP-A-55 113 019

## Description

The present invention relates to an optical switch, more particularly to an optical switch provided with an element for converting an optical polarisation plane, such as a Faraday rotator or an element using an electric optical effect (below, "electro-optic element").

Optical switches, integral components of optical communication systems, generally make use of Faraday rotators or electro-optic elements so as to convert a plane of polarisation of light into two perpendicular polarised light components.

Such optical switches, however, are effective only for light having predetermined wavelengths. If the light has a wavelength other than the predetermined wavelength, the converted polarised light components will not be perpendicular, resulting in cross talk and obstructing correct optical communications.

M. Shirasaki et al.: "Nonmechanical Optical Switch for Single-mode Fibers", Applied Optics, Vol. 2, pp 4229-4234, discloses a bistable optical switch employing a Faraday rotator made of yttrium-iron-garnet (YIG). No measures are taken in this optical switch for dealing with deviation in the light wavelength.

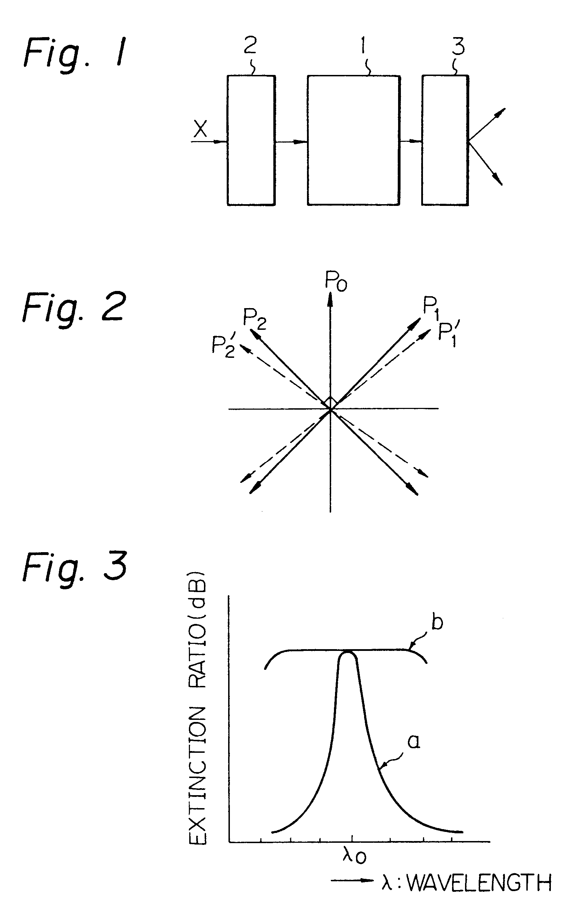

M. Shiraski et al.: "Bistable magneto-optic switch for multimode optical fiber", Applied Optics, Vol. 21, No. 11, pp 1943-1949, discloses an optical switch as shown in Fig. 1 of the drawings and having the features of the preamble of accompanying claim 1.

According to the present invention, there is provided an optical switch comprising:-
a linear polarizer;
a first polarization converter rotating by +45° or -45° the direction of polarization of a beam of linearly polarized light having a wavelength of λ₀ and a direction of polarization identical to the axis of polarization of said linear polarizer; and
a polarized light separation device;
said linear polarizer, said first polarization converter, and said polarized light separation device being arranged in series in the direction of light;
characterized in that:-
a second polarization converter is provided, transforming said beam of linearly polarized light into left-hand or right-hand circularly polarized light;
said second polarization converter being arranged between said first polarization converter and said polarized light separation device or between said linear polarizer and said first polarization converter.

An embodiment of the present invention can provide an optical switch whose effectiveness is independent of the wavelength of light.

An embodiment of the present invention can provide an optical switch with a high extinction ratio.

An embodiment of the present invention can provide an optical switch enabling correct optical communications.

Reference is made, by way of example, to the accompanying drawings, in which:-
Fig. 1 is a schematic view of a conventional optical switch;
Fig. 2 is a view for explaining a polarisation state of the optical switch of Fig. 1;
Fig. 3 is a graph of the relationship between wavelength and an extinction ratio in an optical switch;
Figs. 4 and 5 are schematic views of embodiments of the present invention, constituting a polarisation converting portion of an optical switch with a Faraday rotator and an electro-optic device, respectively;
Fig. 6 is a view for explaining polarisation conversion in the embodiment of Fig. 4 with reference to a Poincaré sphere;
Fig. 7 is a view for explaining Fig. 6 in detail;
Fig. 8 is a view for explaining polarisation conversion in the embodiment of Fig. 5 with reference to a Poincaré sphere; and
Figs. 9 and 10 are schematic views showing other embodiments of the present invention, constituting a polarisation converting portion of an optical switch using electro-optic devices and Faraday rotators, respectively.

Before describing the preferred embodiments of the present invention, a more detailed explanation of the prior art will be given for reference purposes.

Fig. 1 is a schematic view of a conventional optical switch. As shown in Fig. 1, a conventional optical switch comprises a Faraday rotator 1, a polariser 2, and a polarised light separation device 3. A 45° Faraday rotator made of, for example, yttrium-iron-garnet (YIG) is often used. A magnet (not shown) is placed over the Faraday rotator 1.

In such an optical switch, when light X linearly polarised by the polariser 2 is passed through the 45° Faraday rotator 1, polarised light components P₁ or P₂ are obtained whose planes of polarisation are rotated +45° or -45° with respect to the plane of polarisation of the incident light P₀ according to the direction of the magnetic field in the Faraday rotator 1, as shown in Fig. 2. The polarised light P₁ or P₂ may, if desired, be passed through an analyser (not shown).

This polarisation of light is efficiently effected only for light having a certain wavelength. That is, the Faraday rotator 1 is designed only to polarise light having a predetermined wavelength λ₀. To rotate by 45° linearly polarised light having, for example, a wavelength of 1.3 »m, a 45° Faraday rotator having a length of 2.1 mm is necessary.

When the wavelength is shorter than that required, the rotated planes of polarisation deviate to P₁′ and P₂′ shown in Fig. 2. These planes are not perpendicular, resulting in crosstalk in the optical switch. Thus, when the wavelength deviates from the required value, i.e. λ₀, the extinction ratio of the optical switch is severely lowered, as shown in Fig. 3, curve a.

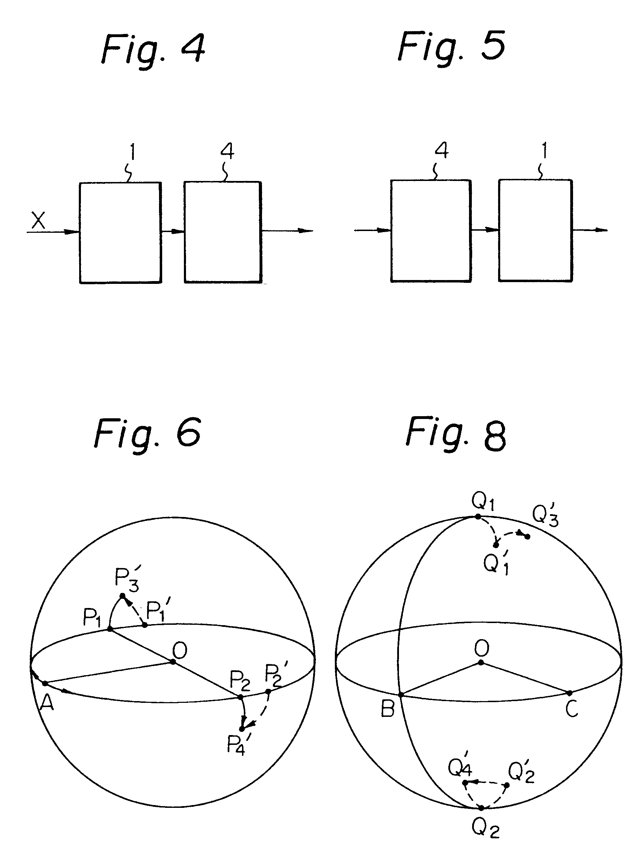

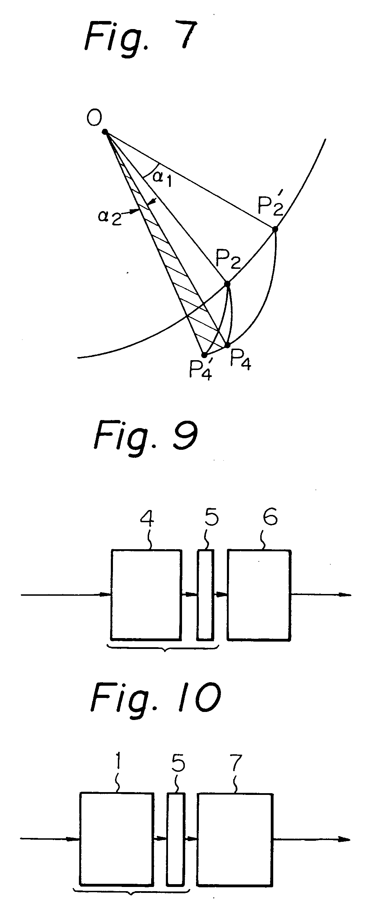

Figs. 4 and 5 are schematic views of embodiments of the present invention, each providing a polarisation converting portion of an optical switch by means of a Faraday rotator and an electro-optic element.

As shown in Fig. 4, a polarisation converting portion of an optical switch is constituted by a 45° Faraday rotator 1 and an electro-optic device 4.

In this optical switch, the direction of the principal axis of the electro-optic element 4 corresponds with the direction of linearly polarised light incident upon it. The electro-optic element 4 is operated at voltages corresponding to a phase difference of ±90° with respect to the wavelength λ₀.

In the optical switch of Fig. 4, the 45° Faraday rotator has a wavelength dependency. Thus, when a deviation Δλ in the wavelength of light passing through the Faraday rotator 1 occurs, a deviation corresponding to kΔλ (where k is a constant determined by the Faraday rotator) occurs in the angle of optical rotation.

Fig. 6 is a view for explaining polarisation conversion in the embodiment of Fig. 4 with reference to a Poincaré sphere. Linearly polarised light incident on the Faraday rotator 1 in Fig. 4 is represented by a point A on the equator of the Poincaré sphere of Fig. 6. When the wavelength of the light is λ₀, the point A is rotated by +90° or -90° around the axis passing through the poles of the Poincaré sphere by the Faraday rotator, whereby the point A moves to a point P₁ or a point P₂.

When a deviation occurs in the wavelength of the light, the point P₁ or the point P₂ moves along the equator of the sphere. As shown in Fig. 6, the points P₁ and P₂ move to points P₁′ and P₂' when the wavelength of light is shorter than λ₀.

Then, the points P₁′ and P₂′ are rotated by substantially +90° and -90° with respect to an axis passing through the points P₁ and P₂ by the electro-optic element 4, which operates as the second polarisation converter, and the points P₁′ and P₂′ are moved to points P₃′ and P₄′, respectively. As a result, the points P₃′ and P₄' are arranged so that they are substantially opposite each other with respect to the centre O of the Poincaré sphere. This mechanism will be explained with reference to Fig. 7, which is a view for explaining Fig. 6 in detail.

In Fig. 7, the deviated point P₂′ of the point P₂ is shown. The point P₂′ representing a shorter wavelength is moved not to a point P₄ rotated by 90° from the point P₂′, but to the point P₄′ rotated more than the point P₄. However, the deviation angle α₂ formed by lines P₄O̅ and P₄′O̅ is remarkably small and negligible in comparison with the deviation angle α₁ due to only the first polarisation conversion.

Thus, the points P₃′ and P₄′ are nearly oppositely arranged on the Poincaré sphere with respect to the centre thereof, which means that the plane of polarisation corresponding to the point P₃′ is substantially perpendicular to the plane of polarisation corresponding to the point P₄′, so crosstalk is reduced.

Fig. 8 is a view for explaining polarisation conversion in the embodiment of Fig. 5. In Fig. 5, the electro-optic element 4 is arranged so that the direction of the principal axis is orientated at 45° to the direction of polarised light incident on the electro-optic element 4. Linearly polarised light incident on the electro-optic element 4 is represented by a point B positioned on the equator of the Poincaré sphere. The effect of the electro-optic element 4 is represented by a rotation of the point on the Poincaré sphere corresponding to the linearly polarised light of wavelength λ₀, by +90° or -90° around an axis C̅O̅ perpendicular to an axis B̅O̅ passing through the point B and the centre O of the Poincaré sphere. As a result, the point B is moved to the point Q₁ or Q₂, i.e. the "Arctic" pole or the "Antarctic" pole.

If the wavelength of the incoming light deviates from the required wavelength, the point Q₁ or Q₂ moves along the curved line passing through the points Q₁, B, and Q₂. That is, as shown in Fig. 8, the points Q₁ and Q₂ move to points Q₁′ and Q₂′ when the wavelength of the light is shortened.

Then, points Q₁′ and Q₂′ are rotated by substantially +90° and -90° with respect to an axis passing through the points Q₁ and Q₂ by the Faraday rotator 1, which functions as the second polarisation converter, and the points Q₁′ and Q₂′ are moved to points Q₃′ and Q₄′. As a result, the points Q₃′ and Q₄′ are arranged so that they are substantially opposite each other with respect to the centre of the Poincaré sphere, so that the plane of polarisation corresponding to the point Q₃′ is substantially perpendicular to the plane of polarisation corresponding to the point Q₄′, thus reducing crosstalk.

Figs. 9 and 10 are schematic views showing other embodiments of the present invention, in which the polarisation converting portion of an optical switch is realised using two electro-optic devices or two Faraday rotators, respectively.

As shown in Fig. 9, a polarisation converting portion of an optical switch consists of an electro-optic element 4, a quarter-wave plate 5, and an electro-optic element 6.

The polarisation converting portion of the optical switch shown in Fig. 9 corresponds to that shown in Fig. 4, except the Faraday rotator 1 is replaced by the electro-optic element 4 and the quarter-wave plate 5.

The quarter-wave plate 5 gives a phase difference of 90° to incident polarised light and has no wavelength dependency. The principal axis of the quarter-wave plate 5 is parallel or perpendicular to a plane of polarisation of linearly polarised light incident on the first polarisation converter, i.e. the electro-optic element 4.

Since the electro-optic device 4 in Fig. 9 is the same as the electro-optic element 4 in Fig. 5, the conversion of the linearly polarised light incident on the electro-optic device 4 in Fig. 9 is the same as that explained with reference to Fig. 8, in which the point B is converted to the points Q₁ and Q₂. After the conversion by the electro-optic element 4, the points Q₁ and Q₂ in Fig. 8 are rotated by 90° around the axis BO to represent the effect of the quarter-wave plate 5, with the result that the points Q₁ and Q₂ in Fig. 8 are converted to points corresponding to points P₁ and P₂ on the Poincaré sphere shown in Fig. 6. Thus, the functions of the electro-optic element 4 and the quarter-wave plate 5 in Fig. 9 are the same as that of the Faraday rotator 1 in Fig. 4.

In Fig. 10, the polarisation converting portion of an optical switch consists of a Faraday rotator 1, a quarter-wave plate 5, and a Faraday rotator 7.

The polarisation converting portion of the optical switch shown in Fig. 10 corresponds to that shown in Fig. 5, except the electro-optic element 4 is replaced by the Faraday rotator 1 and the quarter-wave plate 5.

Since the Faraday rotator 1 in Fig. 10 is the same as the Faraday rotator 1 in Fig. 4, the conversion of the linearly polarised light on the Faraday rotator 1 in Fig. 10 is the same as that explained with reference to Fig. 6, in which the corresponding point A on the Poincaré sphere moves to the points P₁ and P₂.

After the conversion of light by the Faraday rotator 1, the corresponding points P₁ and P₂ in Fig. 6 are rotated by 90° around the axis A̅O̅ to represent the effect of the quarter-wave plate 5, with the result that the points P₁ and P₂ in Fig. 6 change to points corresponding to points Q₁ and Q₂ on the Poincaré sphere shown in Fig. 8.

Thus, the functions of the Faraday rotator 1 and the quarter-wave plate 5 in Fig. 10 are the same as that of the electro-optic device 4 in Fig. 5.

In the optical switch according to the present invention, each of the first and the second polarisation converters can simultaneously convert light components represented by rotational angles of +90° and -90° on the Poincaré sphere.

Further, to make a plurality of final points on the Poincaré sphere, e.g. a plurality of points P₄′ obtained by slight dependency of wavelength, fit one point on the Poincaré sphere, a different wave plate (not shown), e.g. a half-wave plate, may be advantageously used in the optical switch.

Even when light passed through a polarisation converter is converted to two light components whose planes of polarisation are not perpendicular, the two planes of polarisation can be made substantially perpendicular by providing a second polarisation converter in series with the first polarisation converter, thereby reducing crosstalk due to deviation of the wavelength. That is, the extinction ratio is maintained high over a wide range of wavelengths as shown in Fig. 3, curve b.

A YIG 45° Faraday rotator is preferably used as the Faraday rotator, and lithium tantalate (LiTaO₃) or lithium niobate (LiNbO₃) is preferably used for the electro-optic element.

## Claims

1. An optical switch comprising:-
a linear polarizer (2);
a first polarization converter (1; 4, 5; 7) rotating by +45° or -45° the direction of polarization of a beam of linearly polarized light having a wavelength of λ₀ and a direction of polarization identical to the axis of polarization of said linear polarizer (2); and
a polarized light separation device (3);
said linear polarizer (2), said first polarization converter (1; 4, 5; 7), and said polarized light separation device (3) being arranged in series in the direction of light;
characterized in that:-
a second polarization converter (4; 6; 1, 5) is provided, transforming said beam of linearly polarized light into left-hand or right-hand circularly polarized light;
said second polarization converter being arranged between said first polarization converter (1; 4, 5; 7) and said polarized light separation device (3) or between said linear polarizer (2) and said first polarization converter (1; 4, 5; 7).

2. An optical switch as claimed in claim 1, wherein said first polarization converter (1) is a Faraday rotator having a wavelength dependence, and said second polarization converter (4) is an electro-optical device having a phase modulation function arranged with its principal axis aligned with the direction of polarization of one of the orthogonally polarized light components having a wavelength of λ₀ transmitted from said Faraday rotator (1) so as to cause a +90° or -90° change of phase of said light component.

3. An optical switch as claimed in claim 1, wherein said first polarization converter (4) is an electro-optical device having a phase modulation function arranged with its principal axis orientated at 45° to the direction of polarization of light transmitted from said linear polarizer (2) to cause a +90° or -90° change of phase of said transmitted light, and said second polarization converter is a Faraday rotator (1) having a wavelength dependence which rotates by +45° or -45° the direction of polarization of linearly polarized light having a wavelength of λ₀ transmitted from said electro-optical device (4).

4. An optical switch as claimed in claim 1, wherein said first polarization converter (4, 5) consists of an electro-optical device (4) having a phase modulation function arranged to cause a +90° or -90° change of phase of linearly polarized light from said linear polarizer (2) and a quarter-wave plate (5) having a principal axis parallel or perpendicular to the direction of polarization of light from said linear polarizer (2), which rotates by 90° the direction of polarization of linearly polarized light from said electro-optical device (4), and said second polarization converter consists of an electro-optical device (6) having a phase modulation function arranged to cause a +90 or -90° change of phase of linearly polarized light from said quarter-wave plate (5).

5. An optical switch as claimed in claim 1, wherein said first polarization converter (1, 5) consists of a Faraday rotator (1) having a wavelength dependence, and a quarter-wave plate (5) which rotates by 90° the direction of polarization of linearly polarized light from said Faraday rotator (1), and said second polarization converter consists of a Faraday rotator (7) having a wavelength dependence which rotates by +45° or -45° the direction of polarization of linearly polarized light having a wavelength of λ₀ transmitted from said quarter-wave plate (5).

6. An optical switch according to claim 2, 3 or 5, wherein the or each Faraday rotator is a 450 Faraday rotator made of yttrium-iron-garnet (YIG).

7. An optical switch according to claim 2, 3 or 4, wherein the or each electro-optic element is made of lithium tantalate (LiTaO₃) or lithium niobate (LiNbO₃).

## Patentansprüche

1. Ein optischer Schalter, umfassend:
einen Linearpolarisator (2);
einen ersten Polarisationskonverter (1; 4, 5; 7), der die Polarisationsrichtung eines Strahls von linear polarisiertem Licht mit einer Wellenlänge von λ₀ und einer Polarisationsrichtung identisch zur Polarisationsachse des Linearpolarisators (2) um +45° oder -45° dreht; und
eine Polarisationslicht-Trenneinrichtung (3);
wobei der Linearpolarisator (2), der erste Polarisationskonverter (1; 4, 5; 7) und die Polarisationslicht-Trenneinrichtung (3) in Reihe in Richtung des Lichtes angeordnet sind;
dadurch gekennzeichnet, daß
ein zweiter Polarisationskonverter (4; 6; 1, 5) vorgesehen ist, der den Strahl von linear polarisiertem Licht in linkshändig oder rechtshändig zirkular-polarisiertes Licht transformiert;
der zweite Polarisationskonverter zwischen dem ersten Polarisationskonverter (1; 4, 5; 7) und der Polarisationslicht-Trenneinrichtung (3) oder zwischen dem Linearpolarisator (2) und dem ersten Polarisationskonverter (1; 4, 5; 7) angeordnet ist.

2. Ein optischer Schalter nach Anspruch 1, bei dem der erste Polarisationskonverter (1) ein Faraday-Rotator mit einer Wellenlängenabhängigkeit ist und der zweite Polarisationskonverter (4) eine elektro-optische Einrichtung mit einer Phasenmodulationsfunktion ist, deren Hauptachse mit der Polarisationsrichtung von einer der orthogonal polarisierten Lichtkomponenten ausgerichtet ist, die eine von dem Faraday-Rotator (1) transmittierten Wellenlänge λ₀ aufweist, sodaß eine Phasenänderung von +90° oder -90° der Lichtkomponente eintritt.

3. Ein optischer Schalter nach Anspruch 1, bei dem der ersten Polarisationskonverter (4) eine elektro-optische Einrichtung ist mit einer Phasenmodulationsfunktion, deren Hauptachse um 45° zur Polarisationsrichtung des Lichtes ist, das von dem Linearpolarisator (2) transmittiert wird, was zu einer Phasenänderung von +90° oder -90° des transmittierten Lichtes führt, und der zweite Polarisationskonverter ein Faraday-Rotator (1) ist mit einer Wellenlängenabhängigkeit, welche die Polarisationsrichtung von linear polarisiertem Licht mit einer Wellenlänge von λ₀, das von der elektro-optischen Einrichtung (4) transmittiert wird, um +45° oder -45° dreht.

4. Ein elektro-optischer Schalter nach Anspruch 1, bei welchem der erste Polarisationskonverter (4, 5) eine elektrooptische Einrichtung (4) umfaßt mit einer Phasenmodulationsfunktion, die so angeordnet ist, daß eine Phasenänderung von +90° oder -90° von linear polarisiertem Licht von dem Linearpolarisator (2) auftritt, und eine Viertel-Wellenlänge-Platte (5) mit einer Hauptachse parallel oder senkrecht zur Polarisationslicht-Richtung von Licht von dem Linearpolarisator (2), welcher die Polarisationsrichtung des linear polarisierten Lichtes von der elektro-optischen Einrichtung (4) um 90° dreht, und der zweite Polarisationskonverter eine elektro-optische Einrichtung (6) umfaßt mit einer Phasenmodulationsfunktion, die so angeordnet ist, daß eine Phasenänderung um +90° oder -90° von linear polarisiertem Licht von der Viertel-Wellenlänge-Platte (5) auftritt.

5. Ein optischer Schalter nach Anspruch 1, bei welchem der erste Polarisationskonverter (1, 5) einen Faraday-Rotator (1) mit einer Wellenlängenabhängigkeit und eine Viertel-Wellenlänge-Platte (5) umfaßt, welche die Polarisationsrichtung von linear polarisiertem Licht von dem Faraday-Rotator (1) um 90° dreht, und bei welchem der zweite Polarisationskonverter einen Faraday-Rotator (7) mit einer Wellenlängenabhängigkeit umfaßt, der die Polarisationsrichtung von linear polarisiertem Licht mit einer Wellenlänge von λ₀, das von der Viertel-Wellenlänge-Platte (5) transmittiert wird, um +45° oder -45° dreht.

6. Ein optischer Schalter nach Anspruch 2, 3 oder 5, bei welchem der oder jeder Faraday-Rotator einen 45°-Faraday-Rotator aus Yttrium-Eisen-Granat (YIG) ist.

7. Ein optischer Schalter nach Anspruch 2, 3 oder 4, bei welchem das oder jedes elektro-optische Element aus Lithiumtantalat (LiTaO₃) oder Lithiumniobat (LiNbO₃) gefertigt ist.

## Revendications

1. Commutateur optique, comprenant :
un polariseur linéaire (2),
un premier convertisseur de polarisation (1 ; 4, 5 7) qui fait tourner de +45° ou -45° la direction de polarisation par un faisceau de lumière polarisée linéairement ayant une longueur d'onde λ₀ et une direction de polarisation identique à l'axe de polarisation du polariseur linéaire (2), et
un dispositif (3) de séparation de lumière polarisée,
le polariseur linéaire (2), le premier convertisseur de polarisation (1 ; 4, 5 ; 7) et le dispositif (3) de séparation de lumière polarisée étant montés en série dans la direction de la lumière,
caractérisé en ce que :
un second convertisseur (4 ; 6 ; 1, 5) est incorporé et transforme le faisceau de lumière polarisée linéairement en un faisceau polarisé circulairement à gauche ou à droite,
le second convertisseur de polarisation étant disposé entre le premier convertisseur de polarisation (1 ; 4, 5 ; 7) et le dispositif (3) de séparation de lumière polarisée ou entre le polariseur linéaire (2) et le premier convertisseur de polarisation (1 ; 4, 5 ; 7).

2. Commutateur optique selon la revendication 1, dans lequel le premier convertisseur de polarisation (1) est un rotateur de Faraday présentant une dépendance par rapport à la longueur d'onde, et le second convertisseur de polarisation (4) est un dispositif électro-optique ayant une fonction de modulation de phase disposé de manière que l'axe principal soit aligné sur la direction de polarisation de l'une des composantes de lumière polarisée orthogonalement ayant une longueur d'onde λ₀ transmise par le rotateur de Faraday (1) afin que le changement de phase de la composante lumineuse soit égal à +90° ou -90°.

3. Commutateur optique selon la revendication 1, dans lequel le premier convertisseur de polarisation (4) est un dispositif électro-optique ayant une fonction de modulation de phase telle que son axe principal est orienté à 45° par rapport à la direction de polarisation de la lumière transmise par le polariseur linéaire (2) afin que la lumière transmise subisse un changement de phase de +90° ou -90°, et le second convertisseur de polarisation est un rotateur de Faraday (1) présentant une variation avec la longueur d'onde et qui fait tourner la direction de polarisation de la lumière polarisée linéairement, de longueur d'onde λ₀ et transmise par le dispositif électro-optique (4), de +45° ou -45°.

4. Commutateur optique selon la revendication 1, dans lequel le premier convertisseur de polarisation (4, 5) est formé d'un dispositif électro-optique (4) ayant une fonction de modulation de phase destinée à provoquer un changement de phase de +90° ou -90° de la lumière polarisée linéairement provenant du polariseur linéaire (2), et une lame quart d'onde (5) ayant un axe principal parallèle ou perpendiculaire à la direction de polarisation de la lumière provenant du polariseur linéaire (2) et qui fait tourner de 90° la direction de polarisation de la lumière polarisée linéaire provenant du dispositif électro-optique (4), et le second convertisseur de polarisation est constitué d'un dispositif électro-optique (6) ayant une fonction de modulation de phase telle qu'il provoque un changement de phase de +90° ou -90° de la lumière polarisée linéairement provenant de la lame quart d'onde (5).

5. Commutateur optique selon la revendication 1, dans lequel le premier convertisseur de polarisation (1, 5) est constitué d'un rotateur de Faraday (1) présentant une dépendance en fonction de la longueur d'onde, et une lame quart d'onde (5) qui fait tourner de 90° la direction de polarisation de la lumière polarisée linéairement provenant du rotateur de Faraday (1), et le second convertisseur de polarisation est formé d'un rotateur de Faraday (7) présentant une variation en fonction de la longueur d'onde et qui fait tourner de +45° ou -45° la direction de polarisation de lumière polarisée linéairement ayant une longueur d'onde λ₀ transmise par la lame quart d'onde (5).

6. Commutateur optique selon la revendication 2, 3 ou 5, dans lequel le rotateur ou chaque rotateur de Faraday est un rotateur de Faraday à 45° formé d'un grenat de fer et d'yttrium (YIG).

7. Commutateur optique selon la revendication 2, 3 ou 4, dans lequel l'élément électro-optique ou chaque élément électro-optique est formé de tantalate de lithium (LiTaO₃) ou de niobiate de lithium (LiNbO₃).
